# EUROPÄISCHE PATENTSCHRIFT

(11) **EP 2 064 275 B1**
(45) Veröffentlichungstag und Bekanntmachung des Hinweises auf die Patenterteilung: **03.04.2013**
(21) Anmeldenummer: 07818156.7
(22) Anmeldetag: 14.09.2007
(51) Int. Cl.: C08K 3/32, C09D 5/08, C08G 18/32

(54) **CALCIUMHYDROGENPHOSPHATHALTIGE BESCHICHTUNGSZUSAMMENSETZUNG, VERFAHREN ZU IHRER HERSTELLUNG, IHRE VERWENDUNG UND MIT IHR BESCHICHTETE SUBSTRATE**
COATING COMPOSITION CONTAINING CALCIUM HYDROGENPHOSPHATE, PROCESSES FOR PRODUCING IT, ITS USE AND SUBSTRATES COATED WITH IT
COMPOSITION DE REVÊTEMENT CONTENANT UN HYDROGÉNOPHOSPHATE DE CALCIUM, SON PROCÉDÉ DE FABRICATION, SON UTILISATION ET SUBSTRAT ENDUIT DE CETTE COMPOSITION

(30) Priorität: 14.09.2006 DE 102006044035
(43) Veröffentlichungstag der Anmeldung: 03.06.2009
(73) Patentinhaber: BASF Coatings GmbH, 48165 Münster (DE)
(72) Erfinder: RADEMACHER, Josef, 48165 Münster (DE); LAUMANN, Gisela, 48165 Münster (DE); RINK, Heinz-Peter, 48153 Münster (DE)
(74) Vertreter: Leifert, Elmar
(86) Internationale Anmeldenummer: PCT/EP2007/008003
(87) Internationale Veröffentlichungsnummer: WO 2008/031603

(56) Entgegenhaltungen:
- EP-A- 0 009 175
- EP-A- 0 028 290
- EP-A- 0 296 540
- EP-A- 0 686 654
- WO-A-92/01023
- DE-B3-102005 036 630

## Beschreibung

Die vorliegende Erfindung betrifft Beschichtungszusammensetzungen umfassend einen oder mehrere Filmbildner, einen oder mehrere Füllstoffe, optional eines oder mehrere Pigmente, optional eines oder mehrere Additive und optional ein Lösemittel. Die Erfindung betrifft auch Verfahren zur Herstellung dieser Beschichtungszusammensetzungen, ihre Verwendung als Lack im Fahrzeugbereich sowie mit ihnen hergestellte beschichtete Substrate.

Beschichtungszusammensetzungen, insbesondere durch Umsetzung von isocyanatfunktionellen Harzen mit hydroxylfunktionellen Polyolharzen hergestellte Polyurethanbeschichtungen, sind an sich gut bekannt. Diese Beschichtungen zeichnen sich bekanntlich durch eine Reihe hervorragender Eigenschaften einschließlich hoher Dauerhaftigkeit und Chemikalienbeständigkeit aus. Aufgrund ihrer guten Glamour-Eigenschaften eignen sie sich ausgezeichnet für Automobil- und Automobilreparaturanwendungen sowie für technische Anwendungen. Im Vergleich zu wässrigen Zusammensetzungen weisen sie wesentlich bessere Trocknungszeiten und einen verbesserten Korrosionsschutz auf. Bei diesen Beschichtungen liefert jedoch die Polyolkomponente aufgrund der Bildung von Wasserstoffbrückenbindungen und aufgrund des Molekulargewichts der Polymerhauptkette den größten Beitrag zur Gesamtviskosität der Beschichtung, wodurch die Freiheit eingeschränkt wird, bei der Formulierung andere Substanzen einzuarbeiten und die Spezifikationen bezüglich des Applikationsfeststoffgehalts zu erfüllen. Die Verringerung des Molekulargewichts des Polyols führt letztlich zu langsamem Netzwerkaufbau, sofern man keine beträchtlichen Energiemengen einträgt.

Durch die Verwendung von mehr Lösemitteln kann die Gesamtviskosität der Beschichtung zwar verringert und so der Netzwerkaufbau beschleunigt werden, die Verwendung hoher Mengen an Lösemitteln ist aber bedenklich für die Umwelt. Insbesondere erfüllen Beschichtungszusammensetzungen mit hohen Anteilen flüchtiger organischer Verbindungen, insbesondere Lösemitteln (VOC) nicht die Bestimmungen von Richtlinien, in denen der Maximalgehalt an VOC festgelegt wird. In der Zukunft werden dabei VOC-Gehalte von maximal 250 g/l zu realisieren sein.

Die Eigenschaften feststoffreicher polyolhaltiger Polyurethanbeschichtungen können auch durch Verwendung reaktiver Verdünnungsmittel (Reaktivverdünner) verbessert werden. Eine Anwendung dieser Technik wurde durch die US-PS 5,214,086 aufgezeigt. Dort wird die Verwendung von Oligoaldiminen, Oligoketiminen und gehinderten Oligoaminen zur Modifizierung von Polyolzusammensetzungen beschrieben, die zu einer Verringerung der Viskositäten der Mischungen unter Aufrechterhaltung und oftmals Verbesserung des Netzwerkaufbaus und der physikalischen Eigenschaften insgesamt führt. Die Druckschrift beschäftigt sich jedoch nur mit dem Zusatz von Pigmenten zu der modifizierten Polyolzusammensetzung, nicht aber mit der Erzeugung füllstoffreicher modifizierter Polyolzusammensetzungen.

Es ist zwar bekannt, dass diese modifizierten Beschichtungszusammensetzungen Füllstoffe wie zum Beispiel Calciumsulfat, Zinkphosphat und Bariumsulfat enthalten können, die zum Beispiel auf dem Substrat Stahl eine sehr gute Haftung zeigen (EP 686 654; Detlef Gysau, Technologie des Beschichtens - Füllstoffe, Vincentz Verlag, ISBN 3-87870-793-2). Auf Aluminium und auf Multistoff-Substraten zeigen diese Beschichtungszusammensetzungen jedoch sowohl im belasteten als auch im unbelasteten Zustand des Substrats eine unbefriedigende Haftung. Weiterhin verhalten sich diese Beschichtungszusammensetzungen bei Bewitterung unakzeptabel. Haftung auf Aluminium wird üblicherweise anderweitig durch die Verwendung chromathaltiger Füllstoffe erzielt (Lückert, Pigment + Füllstofftabellen, Lückert Verlag, ISBN 3-927342-03-3; Glasurithandbuch von 1984, Vincentz Verlag, ISBN 3-87870-192-6; Peter Volk in "Metalloberfläche", Sonderdruck 5/2006). Wegen der Umweltbelastung soll jedoch zur Erzielung der gewünschten Eigenschaften auf die Verwendung von Chromat verzichtet werden.

Es ist also Aufgabe der Erfindung, feststoffreiche Beschichtungszusammensetzungen zu entwickeln, die chromatfreie Füllstoffe enthalten und auf Aluminium und Multistoffsubstraten eine gute Haftung im belasteten und im unbelasteten Zustand zeigen. Bei Bewitterung sollen die Beschichtungszusammensetzungen weiterhin gute Eigenschaften zeigen. Schließlich sollen sie Eigenschaften wie die Vermittlung eines ausreichenden Korrosionsschutzes, zufrieden stellende Trocknungszeiten und Schleifbarkeit aufweisen.

Diese Aufgabe wird gelöst durch eine Beschichtungszusammensetzung umfassend 25 - 55 Gew.-% eines oder mehrerer Filmbildner, 2,5 - 55 Gew.-% eines oder mehrerer Füllstoffe, 0 - 10, bevorzugt 0,1 - 10 Gew.-% eines oder mehrerer Additive und 0 - 30, bevorzugt 1 - 30 Gew.-% eines Lösemittels bezogen auf das Gesamtgewicht der Beschichtungszusammensetzung, wobei als der bzw. ein Füllstoff Calciumhydrogenphosphat in einem Massenanteil von 2,5 - 20, bevorzugt 5 - 15, besonders bevorzugt 7,5 - 11 Gew.-% bezogen auf das Gesamtgewicht der Beschichtungszusammensetzung enthalten ist. Die Beschichtungszusammensetzung kann weiterhin 0 - 15, bevorzugt 0,01 - 15 Gew.-% bezogen auf das Gesamtgewicht der Beschichtungszusammensetzung eines oder mehrerer Pigmente aufweisen.

Die erfindungsgemässen Beschichtungszusammensetzungen enthalten im Allgemeinen ein Lösemittel. Erfindungsgemässe Beschichtungszusammensetzungen können anstelle der Lösemittel auch Reaktiwerdünner enthalten, die ebenfalls zu einer Reduzierung der Viskosität führen können.

Diese Beschichtungszusammensetzungen haften gut auf Aluminium und Multistoffsubstraten, weisen gute Eigenschaften bei Bewitterung auf, vermitteln einen zufrieden stellenden Korrosionsschutz, trocknen schnell und weisen eine gute Schleifbarkeit auf.

Vorzugsweise weist das Calciumhydrogenphosphat eine Partikelgröße von 1,0 bis 10,0 µm, bevorzugt 2,5 - 4,0 µm (gemessen mit einem Coulter Multisizer II) auf. Bei einer Verwendung von Partikeln dieser Größe resultieren besonders glatte Oberflächen.

Bevorzugt handelt es sich bei dem Filmbildner um eine Kombination aus mindestens einer hydroxyfunktionellen Komponente, mindestens einem Aldimin und/oder Ketimin und mindestens einem Polyisocyanat. Diese füllstoffreichen Beschichtungszusammensetzungen zeigen die allgemein für Polyurethanbeschichtungen bekannten positiven Eigenschaften zusammen mit der gewünschten guten Haftung auf den genannten Substraten.

Bei der hydroxyfunktionellen Komponente kann es sich um hydroxyfunktionelle Öle, wie z.B. Ester des Glycerins, Ricinusöl und Öle auf der Basis von Ricinusfettsäure, und hydroxyfunktionelle Polymere, die durch Epoxidierung ungesättigter Öle gefolgt von polymeranalogen Reaktionen unter Öffnung des Oxiranrings zum Beispiel durch Monoalkohole oder ethoxylierte bzw. propoxylierte Monoalkohole hergestellt werden können, handeln. Dabei beträgt der Gewichtsanteil der hydroxyfunktionellen Fettsäure bezogen auf die Hydroxylgehalte der hydroxyfunktionellen Komponente bevorzugt mehr als 60, weiter bevorzugt mehr als 80 und besonders bevorzugt mehr als 120 %.

Die hydroxyfunktionellen Komponenten weisen bevorzugt als 100%ige Materialien Viskositäten weniger als 4500 mPas bei 23°C und Glasübergangstemperaturen von < 0°C auf.

Bevorzugte Beispiele für kommerzielle hydroxyfunktionelle Komponenten sind Desmophen 1150, Sovermol 818, Sovermol 805, Sovermol 750, Caspol 5009, Caspol 1938 und Caspol 1842.

Weiter bevorzugt handelt es sich bei dem Filmbildner um eine Kombination aus einer hydroxyfunktionellen Komponente, mindestens einem Ketimin und mindestens einem Polyisocyanat. Die Verwendung von Ketiminen statt Aldiminen führt zu deutlich besseren Wassersprühergebnissen, die z.B. durch bessere Blasengradwerte für die Verwendung von Ketiminen festgestellt werden können.

Besonders bevorzugt handelt es sich bei dem verwendeten Aldimin bzw. Ketimin um das Reaktionsprodukt der Umsetzung von Isophorondiamin mit einem entsprechenden Aldehyd bzw. Keton. Diese Reaktionsprodukte weisen eine geringe Viskosität auf und bieten sich somit für den Einsatz in den erfindungsgemäßen Beschichtungszusammensetzungen an.

Bei dem verwendeten Polyisocyanat handelt es sich vorzugsweise um Polyisocyanate auf HMDI-, IPDI- oder TMDI-Basis, die ebenfalls eine geringe Viskosität zeigen. Entsprechende Handelsprodukte sind z.B. Desmodur 2410, Desmodur 3600 (beide HMDI) und Desmodur XP 2565 (IPDI). Besonders bevorzugte Polyisocyanate auf HMDI-Basis sind asymmetrische HMDI-Trimere, die besonders niedrigviskos sind.

Die hydroxyfunktionelle Komponente ist vorzugsweise ein verzweigter Polyalkohol mit Ether- und/oder Estergruppen.

Bevorzugt umfassen die erfindungsgemäßen Beschichtungszusammensetzungen weniger als 540 g/l leichtflüchtige organische Verbindungen (VOC). Besonders bevorzugt umfassen die Beschichtungszusammensetzungen weniger als 250 g/l VOC. Aufgrund ihrer geringen VOC-Gehalte führen sie nur zu einem geringen Ausmaß zu einer Umweltbeeinträchtigung.

Die Beschichtungszusammensetzungen können weiterhin einen oder mehrere Zusatzstoffe ausgewählt aus der Gruppe bestehend aus Dispergiermitteln, rheologischen Additiven, Antiabsetzmitteln, Pigmentstabilisatoren, Füllstoffen und keramischen Mikrosphären aufweisen. Geeignete Additive sind in "Lackadditive", von Johan Bieleman (Wiley-Verlag, ISBN 3-527-28819-8) sowie im "BASF-Handbuch - Lackiertechnik" von Artur Goldschmidt und Hans-Joachim Streiberger (Vincentz Verlag, ISBN 3-87870-324-4) beschrieben

Gegenstand der Erfindung ist auch ein Verfahren zur Herstellung einer erfindungsgemäßen Zusammensetzung, bei dem eine Zusammensetzung umfassend die mindestens eine hydroxyfunktionelle Komponente mit einer Zusammensetzung umfassend das mindestens eine Polyisocyanat vermischt wird. Weiter bevorzugt wird bei dieser Vermischung eine weitere, das mindestens eine Aldimin und/oder Ketimin umfassende Zusammensetzung beigemischt. Die die mindestens eine hydroxyfunktionelle Komponente umfassende Zusammensetzung enthält dabei vorzugsweise auch das bzw. die Additive.

Gegenstand der Erfindung ist weiterhin die Verwendung der erfindungsgemäßen Beschichtungszusammensetzungen als Lack im Fahrzeugbereich. Bevorzugt werden die erfindungsgemäßen Beschichtungszusammensetzungen als Grundierung (Primer) verwendet. Die erfindungsgemässen Beschichtungszusammensetzungen können dabei sowohl als Grundierung unter einer Basislack- und einer Klarlackschicht als auch unter einem einschichtigen Decklack eingesetzt werden. Weiter bevorzugt ist dabei die Verwendung der erfindungsmäßen Beschichtungszusammensetzungen als Grundierung auf Aluminium, Stahl, Kunststoffen und Multistoffsubstraten, d.h. Substraten, die aus unterschiedlichen Stoffen bestehen. Beispiele für Multistoffsubstrate sind insbesondere im Autoreparaturbereich Altlackierungen mit Durchschliffstellen. Hier treffen nicht definierte metallische Substrate (Durchschliffstelle) auf nicht definierte polymere Substrate (Altlackierung z.B. aus Elektrotauchlack, Primer, Basislack und Klarlack). Besonders bevorzugt ist die Verwendung auf Aluminium oder einem Multistoff-Substrat.

Gegenstand der Erfindung ist ebenfalls ein beschichtetes Substrat, herstellbar durch Beschichten eines Substrats mit einer erfindungsgemäßen Beschichtungszusammensetzung und Härten der Beschichtung. Das beschichtete Substrat ist dabei vorzugsweise mit der Beschichtungszusammensetzung als Grundierung unter einer Basislack- und einer Klarlackschicht oder unter einem einschichtigen Decklack beschichtet. Bevorzugt handelt es sich bei dem Substrat um Aluminium, Stahl oder Kunststoff oder um ein Multistoff-Substrat. Besonders bevorzugt handelt es sich bei dem Substrat um Aluminium oder ein Multistoff-Substrat.

### Beispiele:

### Beispiel 1

Es werden die folgenden drei Zusammensetzungen mit den angegebenen Werten für die Gewichtsprozenteinwaagen vorbereitet:
1. 15,5 Verzw. Polyalkohol mit Ether- und Estergruppen (Desmophen® 1150),
   8,5 Calciumhydrogenphosphat, Partikelgröße 2,5 - 4,0 µm (Heucophos® CHP)
   15,8 Butylacetat 98-100%
   1,0 Disperbyk 111
   0,4 Bentone 38
   0,4 Aerosil R 972
   0,3 Bayferrox 3910
   0,1 Flammenruß 101
   10,0 Luzenac 10 MO
   8,0 Silitin N 85
   15,0 Blanc Fixe N
   19,0 Titan Rutil Tiona 595
   6,0 Zeeospheres G 600
2. 80,0 Ketimin (Desmophen® 2965)
   19,4 Butylacetat 98-100%
   0,6 Benzoesäure D
3. 85,0 Asymmetrisches HMDI-Trimer (Desmodur® XP 2410)
   15,0 Butylacetat 98-100%

Die drei Zusammensetzungen werden in einem Volumenverhältnis von 2:1:1 vermischt. Die resultierende Beschichtungszusammensetzung wird in zwei Spritzgängen als Grundierfüller auf Stahl (CRS-Tafeln für Karosserieblech Nr. 18 der Firma Meier & Co.), Aluminium (AlMgSi AA6016 entfettet der Fa. Chemetall) und verzinktem Stahl (Gardobond OG entfettet, elektrolytisch verzinkt der Fa. Chemetall) lackiert und danach bei 20 °C eine Stunde bei einer relativen Luftfeuchtigkeit von 50 % an der Luft getrocknet. Danach erfolgt Überlackierung mit einem Standard-Decklack (z.B. Reihe 68 von Glasurit®), der bei 60 °C über einen Zeitraum von 30 Minuten getrocknet wird.

Das beschichtete Substrat zeigt im Vergleich mit einer ähnlichen Beschichtungszusammensetzung, die sich nur durch den Austausch von Heucophos CHP (Calciumhydrogenphosphat) durch Heucophos ZPA (Zinkphosphat) unterscheidet, im Wassersprühtest und im Salzsprühnebeltest SS sowie ESS zufrieden stellende Ergebnisse.

### Beispiel 2

Es werden die folgenden drei Zusammensetzungen mit den angegebenen Werten für die Gewichtsprozenteinwaagen vorbereitet:
1. 15,5 Verzw. Polyalkohol mit Ether- und Estergruppen (Desmophen® 1150),
   16,5 Calciumhydrogenphosphat, Partikelgröße 2,5 - 4,0 µm (Heucophos® CHP)
   15,8 Butylacetat 98-100%
   1,0 Disperbyk 111
   0,4 Bentone 38
   0,4 Aerosil R 972
   0,3 Bayferrox 3910
   0,1 Flammenruß 101
   6,0 Luzenac 10 MO
   4,0 Silitin N 85
   15,0 Blanc Fixe N
   19,0 Titan Rutil Tiona 595
   6,0 Zeeospheres G 600
2. 80,0 Ketimin (Desmophen® 2965)
   19,4 Butylacetat 98-100%
   0,6 Benzoesäure D
3. 85,0 Asymmetrisches HMDI-Trimer (Desmodu® XP 2410)
   15,0 Butylacetat 98-100%

Die drei Zusammensetzungen werden in einem Volumenverhältnis von 2:1:1 vermischt. Die resultierende Beschichtungszusammensetzung wird in zwei Spritzgängen als Grundierfüller auf Stahl (CRS-Tafeln für Karosserieblech Nr. 18 der Firma Meier & Co.), Aluminium (AlMgSi AA6016 entfettet der Fa. Chemetall) und verzinktem Stahl (Gardobond OG entfettet, elektrolytisch verzinkt der Fa. Chemetall) lackiert und danach bei 20 °C eine Stunde bei einer relativen Luftfeuchtigkeit von 50 % an der Luft getrocknet. Danach erfolgt Überlackierung mit einem Standard-Decklack, der bei 60 °C über einen Zeitraum von 30 Minuten getrocknet wird.

Das beschichtete Substrat zeigt im Vergleich mit einer ähnlichen Beschichtungszusammensetzung, die sich nur durch den Austausch von Heucophos CHP (Calciumhydrogenphosphat) durch Heucophos ZPA (Zinkphosphat) unterscheidet, im Wassersprühtest und im Salzsprühnebeltest SS sowie ESS sehr zufrieden stellende Ergebnisse.

### Tests:

| **Wassersprühtest** | |
|---|---|
| Spezifikation: | in Anlehnung an DIN 50 907 Absatz 3.1 |
| Prüfgerät: | Korrosionsprüfgerät, Eigenbau |
| Prüfraumtemperatur: | Raumtemperatur, 18 - 28 °C |
| Prüfraumbelüftung: | Umluftbetrieb |
| Prüfraumklimatisierung: | Aerosolerzeuger (Defensor 3001) |
| Feuchteregelung: | keine |
| Prüfzyklus: | 5 min. Sprühphase |
| | 55 min. Ruhephase |
| Testdauer: | mindestens 24 h |

| **Salzsprühnebeltest SS** | |
|---|---|
| Spezifikation: | DIN 50 021-SS |
| Prüfgerät: | Korrosionsprüfgeräte gemäß DIN 50 021: SL 2000 und SL 2000 der Firma Liebisch VSNK 1500 S der Firma Heraeus-Vötsch |
| Prüfraumtemperatur: | 35 ± 2 °C kontinuierlich |
| Testzyklus: | Versprühung von wässriger NaCl-Lösung |
| Testparameter: | NaCl-Konzentration des Niederschlags = 50 ± 5 g/l |
| | pH-Wert des Niederschlags = 6,5 - 7,2 (bei 23 ± 2 °C) |

| | Niederschlagsvolumen = 1,5 ± 0,5 ml/h *80cm² |
|---|---|
| Testdauer: | 24 h/Tag |
| **Salzsprühnebeltest ESS** | |
| Spezifikation: | DIN 50 021-ESS |
| Prüfgerät: | Korrosionsprüfgeräte gemäß DIN 50 021: SL 2000 und SL 2000 der Firma Liebisch |
| Prüfraumtemperatur: | 35 ± 2 °C kontinuierlich |
| Testzyklus: | Versprühung von wässriger NaCl-Lösung, essigsauer |
| Testparameter: | NaCl-Konzentration des Niederschlags = 50 ± 5 g/l |
| | pH-Wert des Niederschlags = 3,1 - 3,3 (bei 23 ± 2 °C) |
| | Niederschlagsvolumen = 1,5 ± 0,5 ml/h*80cm² |
| Testdauer: | 24 h/Tag |

### Kratzprobe:

Relative Skala von 1-10, 1 = am schlechtesten, 10 = am besten

### Decklackstand

Relative Skala von 1-10, 1 = am schlechtesten, 10 = am besten

### Testergebnisse:

| | Beispiel 1 | Referenz 1 | Beispiel 2 | Referenz 2 |
|---|---|---|---|---|
| | Untergrund DIN A 4 Tafeln | | | |
| Schichtdicke F | 65 µm | 75 µm | 75 µm | 70 µm |
| Schichtdicke DL | 65 µm | 55 µm | 55 µm | 50 µm |
| Decklackstand | 7 | 7 | 7 | 7 |
| Kratzprobe | K0 | K0 | K0 | K0 |
| Gitterschnitt (ISO 2409) | 0/0 | 0/0 | 0/0 | 0/0 |
| Steinschlag (DIN 55996) | 2 | 2 | 2 | 2,5 |
| Wassersprühtest 240h | | | | |
| Blasengrad (DIN 53209) | m1g1 | m1g1 | m1g1 | m1g1 |
| GT nach 1 h | 0/0 | 0/0 | 0/0 | 0/0 |
| GT nach 24h | 0/0 | 0/0 | 0/0 | 0/0 |
| Salzsprühtest 480h | | | | |
| Unterwander. sicht. | 5 | 12 | 4 | 3 |
| Unterwander. 1 h | 9 | 12 | 10 | 6 |
| Unterwander. 24h | 8 | 10 | 7 | 2 |
| GT nach 1 h | 0/0 | 0/0 | 0/0 | 0/0 |
| GT nach 24h | 0/0 | 0/0 | 0/0 | 0/0 |

| | Untergrund AlMg Si 1,0 | | | |
|---|---|---|---|---|
| Kratzprobe | K1 | K5 | K0 | K5 |
| Gitterschnitt | 0/0 | 2/1 | 0/0 | 5/- |
| Steinschlag | 2,5 | 3,5 | 2 | 4,0 |
| Wassersprühtest 240h | | | | |
| Blasengrad | m1g1 | m2g1 | m1g1 | m3g2 |
| GT nach 1h | 3/3 | 5/- | 0/0 | 5/- |
| GT nach 24h | 0/0 | 3/2 | 0/0 | 5/- |
| Salzsprühtest 480h | | | | |
| Unterwander. sicht. | 4 | 7 | 1 | 20 |
| Unterwander. 1 h | 4 | 9 | 1,5 | alles |
| Unterwander. 24h | | 7 | | alles |
| GT nach 1 h | 2/0 | 5/- | 1/0 | 5/- |
| GT nach 24h | 2/0 | 3/1 | 1/0 | 5/- |

| | Untergrund Verzinkung | | | |
|---|---|---|---|---|
| Kratzprobe | K0 | K1 | K0 | K1 |
| Gitterschnitt | 0/0 | 0/0 | 0/0 | 0/0 |
| Steinschlag | 2 | 2,0 | 2 | 2,0 |
| Wassersprühtest 240h | | | | |
| Blasengrad | m1g1 | m1g1 | m1g1 | m2g1 |
| GT nach 1 h | 0/0 | 0/0 | 0/0 | 0/0 |
| GT nach 24h | 0/0 | 0/0 | 0/0 | 0/0 |
| Salzsprühtest 480h | | | | |
| Unterwander. sicht. | 8 | 7 | 10 | 6 |
| Unterwander. 1 h | 6 | 7 | 7 | 6 |
| Unterwander. 24h | | 7 | | 6 |
| GT nach 1 h | 0/0 | 0/0 | 0/0 | 0/0 |
| GT nach 24h | 0/0 | 0/0 | 0/0 | 0/0 |

## Patentansprüche

1. Beschichtungszusammensetzung umfassend 25 - 55 Gew.-% eines oder mehrerer Filmbildner,
wobei als Filmbildner eine Kombination aus mindestens einer hydroxyfunktionellen Komponente, mindestens einem Aldimin und/oder Ketimin und mindestens einem Polyisocyanat enthalten ist, 2,5 - 55 Gew.-% eines oder mehrerer Füllstoffe, 0-10 Gew.-% eines oder mehrerer Additive und 0 - 30 Gew.-% eines Lösemittels bezogen auf das Gesamtgewicht der Beschichtungszusammensetzung, **dadurch gekennzeichnet, dass** als der bzw. ein Füllstoff Calciumhydrogenphosphat in einem Massenanteil von 2,5 - 20, bevorzugt 5 - 15, besonders bevorzugt 7,5 - 11 Gew.-% bezogen auf das Gesamtgewicht der Beschichtungszusammensetzung enthalten ist.

2. Beschichtungszusammensetzung nach Anspruch 1, **dadurch gekennzeichnet, dass** das Calciumhydrogenphosphat eine durchschnittliche Partikelgröße von 1,0 bis 10,0 µm, bevorzugt 2,5 - 4,0 µm aufweiset.

3. Beschichtungszusammensetzung nach Anspruch 1 oder 2, **dadurch gekennzeichnet, dass** als Filmbildner eine Kombination aus mindestens einer hydroxyfunktionellen Komponente, mindestens einem Ketimin und mindestens einem Polyisocyanat enthalten ist.

4. Beschichtungszusammensetzung nach Anspruch 3 **dadurch gekennzeichnet, dass** als Aldimin bzw. Ketimin das Reaktionsprodukt der Umsetzung von Isophorondiamin mit einem entsprechenden Aldehyd bzw. Keton enthalten ist.

5. Beschichtungszusammensetzung nach einem der Ansprüche 1 bis 4,
**dadurch gekennzeichnet**, als mindestens ein Polyisocyanat ein Polyisocyanat auf HMDI- IPDI- oder TMDI -Basis enthalten ist.

6. Beschichtungszusammensetzung nach Anspruch 5, **dadurch gekennzeichnet, dass** das Polyisocyanat auf HMDI-Basis ein asymmetrisches HMDI-Trimer ist.

7. Beschichtungszusammensetzung nach einem der Ansprüche 1 bis 6,
**dadurch gekennzeichnet, dass** als hydroxyfunktionelle Komponente ein verzweigter Polyalkohol mit Ester- und/oder Ethergruppen enthalten ist.

8. Beschichtungszusammensetzung nach einem der vorhergehenden Ansprüche, **dadurch gekennzeichnet, dass** sie weniger als 540 g/l leichtflüchtiger organischer Verbindungen (VOC) umfasst.

9. Beschichtungszusammensetzung nach Anspruch 8, **dadurch gekennzeichnet, dass** sie weniger als 250 g/l VOC umfasst.

10. Beschichtungszusammensetzung nach einem der vorhergehenden Ansprüche, **dadurch gekennzeichnet, dass** sie weiterhin einen oder mehrere Zusatzstoffe ausgewählt aus der Gruppe bestehend aus Dispergiermitteln, rheologischen Additiven, Antiabsetzmitteln, Pigmentstabilisatoren, Füllstoffen und keramischen Mikrosphären aufweist.

11. Verfahren zur Herstellung einer Beschichtungszusammensetzung nach einem der vorhergehenden Ansprüche, **dadurch gekennzeichnet, dass** eine Zusammensetzung umfassend die mindestens eine hydroxyfunktionelle Komponente mit einer Zusammensetzung umfassend das mindestens eine Polyisocyanat vermischt wird.

12. Verfahren zur Herstellung einer Beschichtungszusammensetzung nach Anspruch 11, **dadurch gekennzeichnet, dass** bei dieser Vermischung eine weitere, das mindestens eine Aldimin und/oder Ketimin umfassende Zusammensetzung beigemischt wird.

13. Verfahren zur Herstellung einer Beschichtungszusammensetzung nach Anspruch 11 oder 12, **dadurch gekennzeichnet, dass** die die mindestens eine hydroxyfunktionelle Komponente umfassende Zusammensetzung dabei das bzw. die Additive enthält.

14. Verwendung einer Beschichtungszusammensetzung nach einem der vorhergehenden Ansprüche als Lack im Fahrzeugbereich.

15. Verwendung einer Beschichtungszusammensetzung nach Anspruch 14 als Grundierung (Primer).

16. Verwendung einer Beschichtungszusammensetzung nach Anspruch 15 als Grundierung unter einer Basislack- und einer Klarlack-Schicht.

17. Verwendung einer Beschichtungszusammensetzung nach Anspruch 15 unter einem einschichtigen Decklack.

18. Verwendung einer Beschichtungszusammensetzung nach einem der Ansprüche 15 - 17 als Grundierung auf Aluminium, Stahl, Kunststoff und Multistoffsubstraten.

19. Beschichtetes Substrat, herstellbar durch Beschichten eines Substrats mit einer Beschichtungszusammensetzung nach einem der Ansprüche 1 bis 10 und Härten der Beschichtung.

20. Beschichtetes Substrat nach Anspruch 19, **dadurch gekennzeichnet, dass** es mit der Beschichtungszusammensetzung als Grundierung unter einer Basislack- und einer Klarlack-Schicht beschichtet ist.

21. Beschichtetes Substrat nach Anspruch 19, **dadurch gekennzeichnet, dass** es mit der Beschichtungszusammensetzung als Grundierung unter einem einschichtigen Decklack beschichtet ist.

22. Beschichtetes Substrat nach einem der Ansprüche 19 - 21, bei dem das Substrat aus Aluminium, Stahl oder Kunststoff besteht oder ein Multistoff-Substrat ist.

## Claims

1. Coating composition comprising 25-55% by weight of one or more film formers,
in which as film former a combination of at least one hydroxy-functional component, at least one aldimine and/or ketimine, and at least one polyisocyanate is present,
2.5-55% by weight of one or more fillers, 0-10% by weight of one or more additives, and 0-30% by weight of a solvent, based on the total weight of the coating composition, **characterized in that** as the or a filler calcium hydrogen phosphate is present in a mass fraction of 2.5-20%, preferably 5-15%, more preferably 7.5-11% by weight based on the total weight of the coating composition.

2. Coating composition according to Claim 1, **characterized in that** the calcium hydrogen phosphate has an average particle size of 1.0 to 10.0 □m, preferably 2.5-4.0 □m.

3. Coating composition according to Claim 1 or 2, **characterized in that** as film former a combination of at least one hydroxy-functional component, at least one ketimine, and at least one polyisocyanate is present.

4. Coating composition according to Claim 3, **characterized in that** as aldimine or ketimine the reaction product from the reaction of isophorone diamine with a corresponding aldehyde or ketone, respectively, is present.

5. Coating composition according to any one of Claims 1 to 4, **characterized in that** as at least one polyisocyanate a polyisocyanate based on HMDI, IPDI or TMDI is present.

6. Coating composition according to Claim 5, **characterized in that** the polyisocyanate based on HMDI is an asymmetric HMDI trimer.

7. Coating composition according to any one of Claims 1 to 6, **characterized in that** as hydroxy-functional component a branched polyalcohol having ester groups and/or ether groups is present.

8. Coating composition according to any one of the preceding claims, **characterized in that** it comprises less than 540 g/l volatile organic compounds (VOC).

9. Coating composition according to Claim 8, **characterized in that** it comprises less than 250 g/l VOC.

10. Coating composition according to any one of the preceding claims, **characterized in that** it is one or more additives selected from the group consisting of dispersants, rheological additives, antisettling agents, pigment stabilizers, fillers, and ceramic microspheres.

11. Process for producing a coating composition according to any one of the preceding claims, **characterized in that** a composition comprising the at least one hydroxy-functional component is mixed with a composition comprising the at least one polyisocyanate.

12. Process for producing a coating composition according to Claim 11, **characterized in that** during said mixing a further composition is admixed which comprises the at least one aldimine and/or ketimine.

13. Process for producing a coating composition according to Claim 11 or 12, **characterized in that** the composition comprising the at least one hydroxy-functional component comprises the additive or additives.

14. Use of a coating composition according to any one of the preceding claims as a coating material in the vehicle sector.

15. Use of a coating composition according to Claim 14 as a primer.

16. Use of a coating composition according to Claim 15 as a primer beneath a basecoat film and a clearcoat film.

17. Use of a coating composition according to Claim 15 beneath a single-coat topcoat.

18. Use of a coating composition according to any one of Claims 15-17 as a primer on aluminum, steel, plastic, and multi-material substrates.

19. Coated substrate producible by coating a substrate with a coating composition according to any one of Claims 1 to 10 and curing the coating.

20. Coated substrate according to Claim 19, **characterized in that** it is coated with the coating composition as primer beneath a basecoat film and a clearcoat film.

21. Coated substrate according to Claim 19, **characterized in that** it is coated with the coating composition as a primer beneath a single-coat topcoat.

22. Coated substrate according to any one of Claims 19-21, in which the substrate is made of aluminum, steel or plastic or is a multi-material substrate.

## Revendications

1. Composition de revêtement comprenant 25-55% en poids d'un ou de plusieurs agents filmogènes, une combinaison d'au moins un composant à fonctionnalité hydroxy, d'au moins une aldimine et/ou d'une cétimine et d'au moins un polyisocyanate étant contenue comme agent filmogène, 2,5-55% en poids d'une ou de plusieurs charges, 0-10% en poids d'un ou de plusieurs additifs et 0-30% en poids d'un solvant, par rapport au poids total de la composition de revêtement, **caractérisée en ce que** de l'hydrogénophosphate de calcium est contenu en une proportion massique de 2,5-20, de préférence de 5-15, de manière particulièrement préférée de 7,5-11% en poids, par rapport au poids total de la composition de revêtement, comme charge ou, selon le cas, comme une charge.

2. Composition de revêtement selon la revendication 1, **caractérisée en ce que** l'hydrogénophosphate de calcium présente une grosseur moyenne des particules de 1, à 10,0 µm, de préférence de 2,5 à 4,0 µm.

3. Composition de revêtement selon la revendication 1 ou 2, **caractérisée en ce qu'**une combinaison d'au moins un composant à fonctionnalité hydroxy, d'au moins une cétimine et d'au moins un polyisocyanate est contenue comme agent filmogène.

4. Composition de revêtement selon la revendication 3, **caractérisée en ce que** le produit de réaction de la transformation d'isophoronediamine avec un aldéhyde ou, selon le cas, une cétone correspondant(e) est contenu comme aldimine ou, selon le cas, comme cétimine.

5. Composition de revêtement selon l'une quelconque des revendications 1 à 4, **caractérisée en ce qu'**un polyisocyanate à base de HMDI, d'IPDI ou de TMDI et contenu comme au moins un polyisocyanate.

6. Composition de revêtement selon la revendication 5, **caractérisée en ce que** le polyisocyanate à base de HMDI est un trimère de HMDI asymétrique.

7. Composition de revêtement selon l'une quelconque des revendications 1 à 6, **caractérisée en ce qu'**un polyalcool ramifié présentant des groupes ester et/ou éther est contenu comme composant à fonctionnalité hydroxy.

8. Composition de revêtement selon l'une quelconque des revendications précédentes, **caractérisée en ce qu'**elle comprend moins de 540 g/l de composés organiques volatils (VOC).

9. Composition de revêtement selon la revendication 8, **caractérisée en ce qu'**elle comprend moins de 250 g/l de VOC.

10. Composition de revêtement selon l'une quelconque des revendications précédentes, **caractérisée en ce qu'**elle contient en outre un ou plusieurs additifs, choisis dans le groupe constitué par les dispersants, les additifs rhéologiques, les agents anti-redépôt, les stabilisateurs de pigments, les charges et les microsphères céramiques.

11. Procédé pour la préparation d'une composition de revêtement selon l'une quelconque des revendications précédentes, **caractérisé en ce qu'**une composition comprenant ledit au moins un composé à fonctionnalité hydroxy est mélangée avec une composition comprenant ledit au moins un polyisocyanate.

12. Procédé pour la préparation d'une composition de revêtement selon la revendication 11, **caractérisé en ce qu'**on introduit dans ce mélange une autre composition, comprenant au moins une aldimine et/ou une cétimine.

13. Procédé pour la préparation d'une composition de revêtement selon la revendication 11 ou 12, **caractérisé en ce que** la composition comprenant ledit au moins un composant à fonctionnalité hydroxy contient le ou, selon le cas, les additif(s).

14. Utilisation d'une composition de revêtement selon l'une quelconque des revendications précédentes comme laque dans le domaine des véhicules.

15. Utilisation d'une composition de revêtement selon la revendication 14 comme apprêt (primer).

16. Utilisation d'une composition de revêtement selon la revendication 15 comme apprêt sous une couche de laque de base et une couche de laque claire.

17. Utilisation d'une composition de revêtement selon la revendication 15 sous une laque de recouvrement à une couche.

18. Utilisation d'une composition de revêtement selon l'une ou plusieurs des revendications 15 à 17 comme apprêt sur de l'aluminium, de l'acier, un matériau synthétique et des substrats en matériaux multiples.

19. Substrat revêtu, pouvant être produit par revêtement d'un substrat par une composition de revêtement selon l'une quelconque des revendications 1 à 10 et durcissement du revêtement.

20. Substrat revêtu selon la revendication 19, **caractérisé en ce qu'**il est revêtu par la composition de revêtement comme apprêt, sous une couche de laque de base et une couche de laque claire.

21. Substrat revêtu selon la revendication 19, **caractérisé en ce qu'**il est revêtu par la composition de revêtement comme apprêt sous une laque de recouvrement à une couche.

22. Substrat revêtu selon l'une quelconque des revendications 19 à 21, dans lequel le substrat est sen aluminium, en acier ou en matériau synthétique ou est un substrat en matériaux multiples.
